# EUROPEAN PATENT APPLICATION

(11) **EP 4 625 698 A1**
(43) Date of publication of application: **01.10.2025**
(21) Application number: 23925037.6
(22) Date of filing: 30.11.2023
(51) Int. Cl.: H01Q 1/52

(54) **ELECTRONIC DEVICE AND COMMUNICATION SYSTEM**

(30) Priority: 02.03.2023 CN 202310195969
(71) Applicant: GUANGDONG OPPO MOBILE TELECOMMUNICATIONS CORP., LTD., Dongguan, Guangdong 523860 (CN)
(72) Inventor: YUAN, Qu, Dongguan, Guangdong 523860 (CN)
(74) Representative: Novagraaf Technologies
(86) International application number: PCT/CN2023/135443
(87) International publication number: WO 2024/179090

(57) **Abstract**

Provided in the present application are an electronic device and a communication system. The electronic device comprises a functional conductor and an NFC antenna radiator, wherein the functional conductor is annular, and an inner edge of the functional conductor is enclosed to form a hollowed-out area; the NFC antenna radiator is located on one side of the functional conductor and at least receives/sends an NFC signal towards the side where the functional conductor is located, and the orthographic projection of at least part of the NFC antenna radiator on the plane where the functional conductor is located is located in the hollowed-out area; and the NFC antenna radiator is configured to be electrically connected to a radio-frequency signal source, and under the excitation of the radio-frequency signal source, the NFC antenna radiator generates, in the hollowed-out area, a first electromagnetic field and a second electromagnetic field with opposite directions, such that the functional conductor generates a first induction current and a second induction current with opposite directions. The communication system comprises an NFC device and an electronic device. The electronic device and communication system provided in the present application can enhance the NFC communication performance and improve the user experience.

## Description

This application claims priority to Chinese Patent Application No. 202310195969.8, filed on March 2, 2023, in the title of "ELECTRONIC DEVICE AND COMMUNICATION SYSTEM", the entire contents of which are herein incorporated by reference in their entireties.

### TECHNICAL FIELD

The present disclosure relates, but is not limited, to the field of wireless communication technology, and more particularly, to an electronic device and a communication system.

### BACKGROUND

Near Field Communication (NFC) technology enables mobile payments, electronic ticketing, access control, mobile identification, anti-counterfeiting, and more. In related art, an NFC antenna of an electronic device may be shielded by a metal decorative member of a camera module, resulting in a communication blind spot and affecting user experience.

### SUMMARY OF THE DISCLOSURE

Some embodiments of the present disclosure provide an electronic device and a communication system, which may enhance an NFC communication performance and improve user experience.

In a first aspect, some embodiments of the present disclosure may provide an electronic device. The electronic device may include a functional conductor and a near field communication (NFC) antenna radiator. The functional conductor may be substantially ring-shaped. A hollowed-out region may be surrounded and defined by an inner edge of the functional conductor. The NFC antenna radiator may be disposed on a side of the functional conductor and configured to transmit and receive a NFC signal at least toward a side where the functional conductor is located. An orthographic projection of the NFC antenna radiator on a plane where the functional conductor is located, may be at least partially located within the hollowed-out region. The NFC antenna radiator may be configured to be electrically connected to a radio frequency (RF) signal source and to generate a first electromagnetic field and a second electromagnetic field in the hollowed-out region under an excitation of the RF signal source, for enabling the functional conductor to generate a first induced current and a second induced current. The first electromagnetic field and the second electromagnetic field may be in opposite directions. The first induced current and the second induced current may be in opposite directions.

In another aspect, some embodiments of the present disclosure may provide a communication system. The communication system may include an NFC device and the electronic device. A wireless communication may be performed between the NFC device and the electronic device.

### BRIEF DESCRIPTION OF THE DRAWINGS

To more clearly illustrate technical solutions of some embodiments of the present disclosure, the following will briefly introduce the accompanying drawings required for the embodiments.
FIG. 1 is a schematic structural view of an electronic device according to some embodiments of the present disclosure.
FIG. 2 is a schematic structural exploded view of the electronic device shown in FIG. 1, where the electronic device includes a display screen, a housing, a circuit board, and a camera module.
FIG. 3 is a schematic structural plan view of the electronic device shown in FIG. 2, where the electronic device further includes a functional conductor, an NFC antenna radiator, and a radio frequency (RF) signal source.
FIG. 4 is a schematic view of the electronic device shown in FIG. 3 in an application scenario, where directions of electromagnetic fields and directions of currents of the electronic device are shown.
FIG. 5 is a schematic view of a distribution of a first electromagnetic field and a second electromagnetic field on two sides of an NFC antenna radiator in the electronic device shown in FIG. 4.
FIG. 6 is a schematic plan view of a distribution of currents of a functional conductor in the electronic device shown in FIG. 4.
FIG. 7 is a schematic view of the electronic device shown in FIG. 3 in another application scenario, where directions of electromagnetic fields and directions of currents of the electronic device are shown.
FIG. 8 is a schematic structural plan view of the NFC antenna radiator shown in FIG. 3, where orthographic projection of the NFC antenna radiator on the plane where the functional conductor is located, substantially extends along a straight line within a hollowed-out region.
FIG. 9 is a schematic structural plan view of the NFC antenna radiator shown in FIG. 3, where the orthographic projection of the NFC antenna radiator on the plane where the functional conductor is located, at least partially overlaps a center line of an inner edge of the functional conductor.
FIG. 10 is another schematic structural plan view of the NFC antenna radiator shown in FIG. 3, where the orthographic projection of the NFC antenna radiator on the plane where the functional conductor is located, at least partially overlaps a center line of an inner edge of the functional conductor.
FIG. 11 is still another schematic structural plan view of the NFC antenna radiator shown in FIG. 3, where the orthographic projection of the NFC antenna radiator on the plane where the functional conductor is located, at least partially overlaps a center line of an inner edge of the functional conductor.
FIG. 12 is a schematic structural plan view of the electronic device shown in FIG. 10, where orthographic projections of both ends of the NFC antenna radiator on the plane where the functional conductor is located, is located within the hollowed-out region.
FIG. 13 is a schematic structural plan view of the electronic device shown in FIG. 10, where an orthographic projection of an end of the NFC antenna radiator on the plane where the functional conductor is located, is located within the hollowed-out region and an orthographic projection of another end of the NFC antenna radiator on the plane where the functional conductor is located, overlaps with the functional conductor.
FIG. 14 is a schematic structural plan view of the electronic device shown in FIG. 10, where an orthographic projection of an end of the NFC antenna radiator on the plane where the functional conductor is located, is located within the hollowed-out region and an orthographic projection of another end of the NFC antenna radiator on the plane where the functional conductor is located, is located outside the functional conductor.
FIG. 15 is a schematic structural plan view of the electronic device shown in FIG. 10, where orthographic projections of both ends of the NFC antenna radiator on the plane where the functional conductor is located, overlap with the functional conductor.
FIG. 16 is a schematic structural plan view of the electronic device shown in FIG. 10, where an orthographic projection of an end of the NFC antenna radiator on the plane where the functional conductor is located, overlaps with the functional conductor and an orthographic projection of another end of the NFC antenna radiator on the plane where the functional conductor is located, is located outside the functional conductor.
FIG. 17 is a schematic structural plan view of the electronic device shown in FIG. 10, where orthographic projections of both ends of the NFC antenna radiator on the plane where the functional conductor is located, are located outside the functional conductor.
FIG. 18 is a schematic structural plan view of the electronic device shown in FIG. 15, where the NFC antenna radiator divides the functional conductor into the first conductive portion and the second conductive portion.
FIG. 19 is a schematic structural plan view of the electronic device shown in FIG. 16, where the NFC antenna radiator divides the functional conductor into the first conductive portion and the second conductive portion.
FIG. 20 is a schematic structural plan view of the electronic device shown in FIG. 17, where the NFC antenna radiator divides the functional conductor into the first conductive portion and the second conductive portion.
FIG. 21 is a schematic structural plan view of the electronic device shown in FIG. 9, where the NFC antenna radiator divides the functional conductor into the first conductive portion and the second conductive portion.
FIG. 22 is a schematic structural plan view of the NFC antenna radiator of the electronic device shown in FIG. 10, where the NFC antenna radiator includes a plurality of wire segments arranged at intervals.
FIG. 23 is a first schematic structural plan view of the NFC antenna radiator of the electronic device shown in FIG. 12, where the NFC antenna radiator is substantially ring-shaped.
FIG. 24 is a second schematic structural plan view of the NFC antenna radiator of the electronic device shown in FIG. 13, where the NFC antenna radiator is substantially ring-shaped.
FIG. 25 is a third schematic structural plan view of the NFC antenna radiator of the electronic device shown in FIG. 14, where the NFC antenna radiator is substantially ring-shaped.
FIG. 26 is a fourth schematic structural plan view of the NFC antenna radiator of the electronic device shown in FIG. 15, where the NFC antenna radiator is substantially ring-shaped.
FIG. 27 is a fifth schematic structural plan view of the NFC antenna radiator of the electronic device shown in FIG. 16, where the NFC antenna radiator is substantially ring-shaped.
FIG. 28 is a sixth schematic structural plan view of the NFC antenna radiator of the electronic device shown in FIG. 17, where the NFC antenna radiator is substantially ring-shaped.
FIG. 29 is a schematic structural plan view of an NFC antenna radiator of an electronic device according to some embodiments of the present disclosure, where the NFC antenna radiator includes a first radiating portion and a second radiating portion arranged opposite to each other.
FIG. 30 is another schematic structural plan view of an NFC antenna radiator of an electronic device according to some embodiments of the present disclosure, where the NFC antenna radiator includes a first radiating portion and a second radiating portion arranged opposite to each other.
FIG. 31 is a schematic structural plan view of the NFC antenna radiator of the electronic device shown in FIG. 28, where the first radiating portion includes one or more first wire segments and the second radiating portion includes one or more second wire segments.
FIG. 32 is a schematic structural plan view of the electronic device shown in FIG. 11, where the electronic device further includes an electrical connection member electrically connected between two ends of the NFC antenna radiator.
FIG. 33 is another schematic structural plan view of the electronic device shown in FIG. 11, where the electronic device further includes an electrical connection member electrically connected between two ends of the NFC antenna radiator.
FIG. 34 is schematic structural view of a communication system according to some embodiments of the present disclosure.

### DETAILED DESCRIPTION

Some embodiments of the present disclosure may provide an electronic device. The electronic device may include a functional conductor and a near field communication (NFC) antenna radiator. The functional conductor may be substantially ring-shaped. A hollowed-out region may be surrounded and defined by an inner edge of the functional conductor. The NFC antenna radiator may be disposed on a side of the functional conductor and configured to transmit and receive a NFC signal at least toward a side where the functional conductor is located. An orthographic projection of the NFC antenna radiator on a plane where the functional conductor is located, may be at least partially located within the hollowed-out region. The NFC antenna radiator may be configured to be electrically connected to a radio frequency (RF) signal source and to generate a first electromagnetic field and a second electromagnetic field in the hollowed-out region under an excitation of the RF signal source, for enabling the functional conductor to generate a first induced current and a second induced current. The first electromagnetic field and the second electromagnetic field may be in opposite directions. The first induced current and the second induced current may be in opposite directions.

In some embodiments, a difference between a magnitude of the first induced current and a magnitude of the second induced current may be less than or equal to a magnitude of a predetermined current.

In some embodiments, the magnitude of the predetermined current may be substantially equal to zero.

In some embodiments, a difference between a magnetic flux of the first electromagnetic field passing through the functional conductor and a magnetic flux of the second electromagnetic field passing through the functional conductor may be less than or equal to a predetermined magnetic flux.

In some embodiments, the orthographic projection of the NFC antenna radiator on the plane where the functional conductor is located, may substantially extend along a straight line

In some embodiments, the orthographic projection of the NFC antenna radiator on the plane where the functional conductor is located, at least partially may cover a center line of the inner edge of the functional conductor.

In some embodiments, the function conductor may be divided into a first conductive portion and a second conductive portion by the orthographic projection of the NFC antenna radiator on the plane where the functional conductor is located. The first conductive portion may be configured to generate the first induced current and the second conductive portion may be configured to generate the second induced current.

In some embodiments, a first sub hollowed-out region of the hollowed-out region may be defined between the first conductive portion and the orthographic projection of the NFC antenna radiator on the plane where the functional conductor is located, and a second sub hollowed-out region of the hollowed-out region is defined between the second conductive portion and the orthographic projection of the NFC antenna radiator on the plane where the functional conductor is located. The first sub hollowed-out region may be configured to generate the first electromagnetic field and the second sub hollowed-out region may be configured to generate the second electromagnetic field.

In some embodiments, orthographic projections of both ends of the NFC antenna radiator on the plane where the functional conductor is located, may be located within the hollowed-out region. In some embodiments, an orthographic projection of an end of the NFC antenna radiator on the plane where the functional conductor is located, may be located within the hollowed-out region and an orthographic projection of another end of the NFC antenna radiator on the plane where the functional conductor is located, may overlap with the functional conductor. In some embodiments, an orthographic projection of an end of the NFC antenna radiator on the plane where the functional conductor is located, may be located within the hollowed-out region and an orthographic projection of another end of the NFC antenna radiator on the plane where the functional conductor is located, may be located outside the functional conductor.

In some embodiments, orthographic projections of both ends of the NFC antenna radiator on the plane where the functional conductor is located, may overlap with the functional conductor. In some embodiments, an orthographic projection of an end of the NFC antenna radiator on the plane where the functional conductor is located, may overlap with the functional conductor and an orthographic projection of another end of the NFC antenna radiator on the plane where the functional conductor is located, may be located outside the functional conductor. In some embodiments, orthographic projections of both ends of the NFC antenna radiator on the plane where the functional conductor is located, may be located outside the functional conductor.

In some embodiments, a first sub hollowed-out region of the hollowed-out region and a second sub hollowed-out region of the hollowed-out region may be defined between the functional conductor and the orthographic projection of the NFC antenna radiator on the plane where the functional conductor may be located. An area of the first sub hollowed-out region may be substantially equal to an area of the second sub hollowed-out region.

In some embodiments, the functional conductor may be divided into a first conductive portion and a second conductive portion by the orthographic projection of the NFC antenna radiator on the plane where the functional conductor is located. The first conductive portion may be configured to generate the first induced current. The second conductive portion may be configured to generate the second induced current. A direction of an induced electromagnetic field generated by the first induced current in the hollowed-out region may be opposite to a direction of an induced electromagnetic field generated by the second induced current in the hollowed-out region.

In some embodiments, an extension dimension of the first conductive portion may be substantially equal to an extension dimension of the second conductive portion.

In some embodiments, the NFC antenna radiator may include a plurality of wire segments arranged at intervals. A plurality of wire segments may be configured to generate NFC currents in the same direction under the excitation of the RF signal source.

In some embodiments, the NFC antenna radiator may be substantially ring-shaped.

In some embodiments, the NFC antenna radiator may include a first radiating portion and a second radiating portion arranged opposite to each other. An orthographic projection of the first radiating portion on the plane where the functional conductor is located, may be at least partially located within the hollowed-out region. An orthographic projection of the second radiating portion on the plane where the functional conductor is located, may be located outside the functional conductor.

In some embodiments, two ends of the NFC antenna radiator may be spaced apart from each other. The electronic device may further include an electrical connection member electrically connected between the two ends of the NFC antenna radiator. An orthographic projection of the electrical connection member on the plane where the functional conductor is located, may be located outside the functional conductor.

In some embodiments, the NFC antenna radiator may be one of the following: a flexible printed circuit (FPC) antenna radiator, a laser direct structuring (LDS) antenna radiator, or a printed circuit board (PCB) antenna radiator. The electronic device may further include a conductive frame and at least a part of the conductive frame may form the electrical connection member.

In some embodiments, the electronic device may further include a camera module. The functional conductor may be implemented by a decorative member of the camera module.

Some embodiments of the present disclosure may further provide a communication system. The communication system may include an NFC device and the electronic device. A wireless communication may be performed between the NFC device and the electronic device.

The following will clearly and completely describe some technical solutions provided in the present disclosure with reference to the accompanying drawings. Obviously, the embodiments described in the present disclosure are only a part of the possible embodiments, rather than all of them. Based on the embodiments described in the present disclosure, all other embodiments obtained by those skills in the art without creative effort shall fall within the scope of protection of the present disclosure.

In the present disclosure, references to "embodiment" or "implementation" mean that a particular feature, structure, or characteristic described in connection with the embodiment or implementation may be included in at least one embodiment of the present disclosure. The appearance of such phrases in various places in the specification does not necessarily refer to the same embodiment, nor is it an independent or alternative embodiment mutually exclusive to other embodiments. Those skills in the art will understand explicitly and implicitly that the embodiments described in the present disclosure may be combined with other embodiments.

In the specification and claims of the present disclosure, as well as in the accompanying drawings mentioned above, terms such as "first," "second," etc., are used to distinguish between different objects and not to describe a specific order. The terms "include," "have," and any variations thereof are intended to cover non-exclusive inclusion.

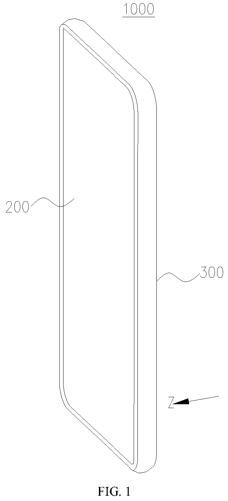

As shown in FIG. 1, FIG. 1 is a schematic structural view of an electronic device 1000 according to some embodiments of the present disclosure. The electronic device 1000 may be a device with an NFC communication function, such as a mobile phone, a tablet, a watch, a wristband, or etc. Some embodiments of the present disclosure may take the mobile phone as an example.

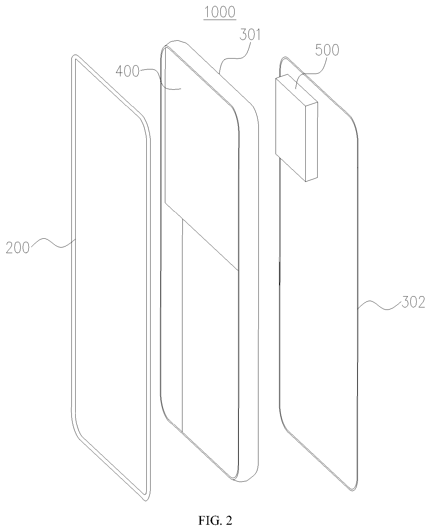

As shown in FIG. 1 and FIG. 2, the electronic device 1000 may include a display screen 200, a housing 300, a circuit board 400, and a camera module 500.

The display screen 200 may be configured to display an image, a video, and the like. In terms of bending performance, the display screen 200 may be a flexible display screen or a rigid display screen. In terms of light-emitting source, the display screen 200 may be an Organic Light Emitting Diode (OLED) display, a Light Emitting Diode (LED) display, a Liquid Crystal Display (LCD), or the like.

The housing 300 may include a middle frame 301 and a back cover 302. The back cover 302 may be arranged opposite to the display screen 200. The middle frame 301 may be connected between the display screen 200 and the back cover 302. An accommodating space may be defined among the middle frame 301, the back cover 302, and the display screen 200. A material of the middle frame 301 and a material of the back cover 302 may be the same or different. For example, the material of the middle frame 301 may include metal, alloy, composite material, plastic, glass, or the like. The material of the back cover 302 may include plastic, glass, ceramic, metal, alloy, or the like.

The circuit board 400 may be accommodated in the accommodating space. In terms of structural layers, the circuit board 400 may be one of the following: a single-sided circuit board, a double-sided circuit board, or a multilayer circuit board. In terms of bending characteristics, the circuit board 400 may be one of the following: a flexible circuit board, a rigid circuit board, or a rigid-flex circuit board. In terms of molding processes, the circuit board 400 may be one of the following: a Printed Circuit Board (PCB), a Flexible Printed Circuit (FPC), a Laser Direct Structuring (LDS) circuit board, or the like.

The camera module 500 may be a rear camera module. It may be understood that the camera module 500 may acquire light from a side away from the display screen 200 and perform imaging. The camera module 500 may include one or more cameras, i.e., the camera module 500 may be a single-camera module, a dual-camera module, or a multi-camera module. In some embodiments, the camera module may include a main camera, in combination with any one or more of a wide-angle camera, a telephoto camera, a macro camera, and a depth camera. Each camera may include an optical lens and an image sensor. The optical lens may be configured to process light. The optical lens may be a fixed-focus lens, a telescopic lens, an automatic zoom lens, or the like. The image sensor may be configured to perform photoelectric conversion. The image sensor may be a solid-state image sensor, for example, a Charge-Coupled Device (CCD) sensor, a Complementary Metal Oxide Semiconductor (CMOS) sensor, or the like.

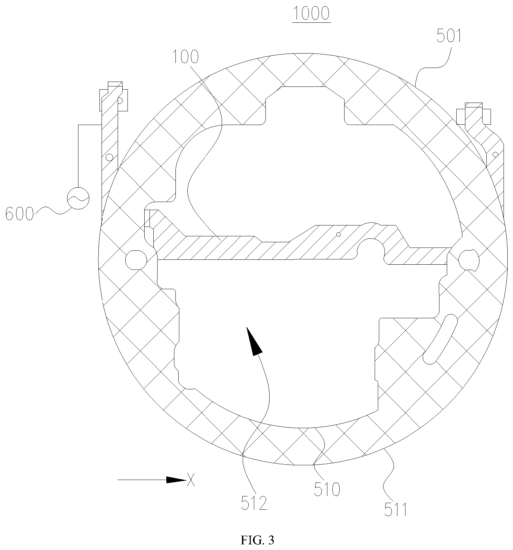

As shown in FIG. 3, the electronic device 1000 may further include a functional conductor 501, an NFC antenna radiator 100, and a radio frequency (RF) signal source 600.

The functional conductor 501 may be an electrically conductive element in the electronic device 1000 with one or more functions such as decoration, support, connection, strength enhancement, and the like. For example, the functional conductor 501 may be a decorative member of the camera module 500, a decorative member of the back cover 302, a bracket of the camera module 500, a reinforcement member of the back cover 302, or the like. A material of the functional conductor 501 may be metal, alloy, or the like. The functional conductor 501 may be substantially ring-shaped. For example, the functional conductor 501 may substantially be a circular ring conductor, an elliptical ring conductor, a rectangular ring conductor, a square ring conductor, a polygonal ring conductor, or various irregular ring conductors. It may be understood that the functional conductor 501 may form a closed loop, i.e., the functional conductor 501 may be closed. The ring-shaped functional conductor 501 may include an inner edge 510 and an outer edge 511. The inner edge 510 of the functional conductor 501 may surround and define a hollowed-out region 512. The present disclosure may not limit a shape of the hollowed-out region 512. For example, the shape of the hollowed-out region 512 may be circular, elliptical, rectangular, square, polygonal, or various irregular shapes. It may be understood that the shape of the hollowed-out region 512 may be substantially the same as a shape of the inner edge 510 of the functional conductor 501. The shape of the inner edge 510 and a shape of the outer edge 511 of the functional conductor 501 may be the same or different, which may be designed according to actual needs.

The NFC antenna radiator 100 may be a conductor capable of obtaining current of a certain frequency and converting the current into an NFC electromagnetic wave signal radiated into space, or performing a reverse conversion. In other words, the NFC antenna radiator 100 may transmit and receive a NFC signal under an excitation of the RF signal source 600. The NFC antenna radiator 100 may be a coil radiator, a plate-shaped radiator (e.g., an FPC antenna radiator), or the like. In some embodiments, the NFC antenna radiator 100 may be one of the following: an FPC antenna radiator, an LDS antenna radiator, or a PCB antenna radiator. A material of the NFC antenna radiator 100 may be metal, alloy, or the like. The NFC antenna radiator 100 may be disposed on a side of the functional conductor 501. The NFC antenna radiator 100 may be configured to transmit and receive the NFC signal at least toward a side where the functional conductor 501 is located. In other words, the functional conductor 501 may be located on a signal transceiving side of the NFC antenna radiator 100. In some embodiments, the NFC antenna radiator 100 may be located inside the accommodating space of the electronic device 1000. The NFC antenna radiator 100 may be configured to transmit and receive the NFC signal toward a side where the back cover 302 of the electronic device 1000 is located. In a thickness direction of the electronic device 1000, the functional conductor 501 may be located between the NFC antenna radiator 100 and the back cover, or on a side of the back cover away from the NFC antenna radiator 100. The thickness direction of the electronic device 1000 may refer to a Z-axis direction shown in the figures. An orthographic projection of the NFC antenna radiator 100 on a plane where the functional conductor 501 is located, may be at least partially located within the hollowed-out region 512. It may be understood that a part of the orthographic projection of the NFC antenna radiator 100 on the plane where the functional conductor 501 is located, may be located within the hollowed-out region 512, or, the orthographic projection of the NFC antenna radiator 100 on the plane where the functional conductor 501 is located, may be entirely located within the hollowed-out region 512.

The NFC antenna radiator 100 may be configured to be electrically connected to a RF signal source 600. The RF signal source 600 may be an RF chip, an RF module, or the like. The RF signal source 600 may be configured to provide RF current. The NFC antenna radiator 100 and the RF signal source 600 may be electrically connected to each other directly or indirectly. For example, the NFC antenna radiator 100 and the RF signal source 600 may be electrically connected through one or more electrical connection members, such as a conductive shrapnel, a conductive wire, a conductive pillar, a feed probe, a circuit board, or the like. Under the excitation of the RF signal source 600, the NFC antenna radiator 100 may be configured to generate electromagnetic fields in opposite directions within the hollowed-out region 512, for enabling the functional conductor 501 to generate induced currents in opposite directions. In other words, under the excitation of the RF signal source 600, the NFC antenna radiator 100 may generate a first electromagnetic field and a second electromagnetic field in the hollowed-out region 512, for enabling the functional conductor 501 to generate a first induced current and a second induced current. A direction of the first electromagnetic field may be opposite to a direction of the second electromagnetic field. A direction of the first induced current may be opposite to a direction of the second induced current.

For example, under the excitation of the RF signal source 600, the first electromagnetic field generated by the NFC antenna radiator 100 in a part of the hollowed-out region 512 may be opposite in direction to the second electromagnetic field generated in another part of the hollowed-out region 512. The first induced current generated in the functional conductor 501 near the part of the hollowed-out region 512 may be opposite in direction to the second induced current generated in the functional conductor 501 near the another part of the hollowed-out region 512. In some embodiments, the first electromagnetic field and the second electromagnetic field generated in opposite directions by the NFC antenna radiator 100 within the hollowed-out region 512 may be distributed along an extension direction of the NFC antenna radiator 100 on both sides of the orthographic projection of the NFC antenna radiator 100 on the plane where the functional conductor 501 is located. In some embodiments of the present disclosure, the extension direction of the orthographic projection of the NFC antenna radiator 100 on the plane where the functional conductor 501 is located, may refer to an X-axis direction shown in FIG. 3. The extension direction of the orthographic projection of the NFC antenna radiator 100 on the plane where the functional conductor 501 is located, may further be understood as a length direction of the orthographic projection of the NFC antenna radiator 100 on the plane where the functional conductor 501 is located.

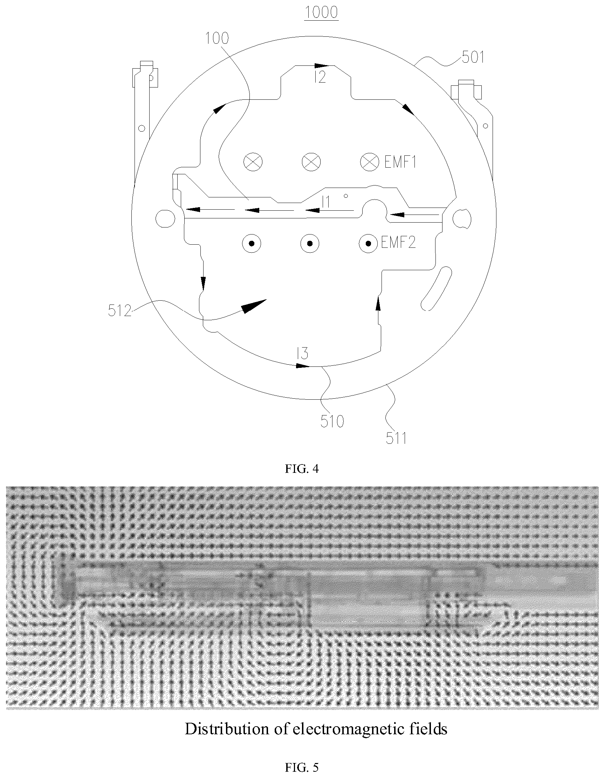

In a possible application scenario, as shown in FIG. 4, the NFC antenna radiator 100 may be configured to generate an NFC current I1 under the excitation of the RF signal source 600. A flow direction of the NFC current may be indicated by I1 in FIG. 4. In this case, the NFC antenna radiator 100 may be configured to generate a first electromagnetic field EMF1 within the hollowed-out region 512 on a side of the extension direction of the NFC antenna radiator 100. A direction of the first electromagnetic field may be indicated by EMF1 in FIG. 4. The NFC antenna radiator 100 may be configured to generate a second electromagnetic field EMF2 within the hollowed-out region 512 on another side of the extension direction of the NFC antenna radiator 100. A direction of the second electromagnetic field may be indicated by EMF2 in FIG. 4. A first induced current generated by the functional conductor 501 near the first electromagnetic field EMF1 may be I2. A flow direction of the first induced current may be indicated by I2 in FIG. 4. A second induced current generated by the functional conductor 501 near the second electromagnetic field EMF2 may be I3. A flow direction of the second induced current may be indicated by I3 in FIG. 4. Since the directions of the first electromagnetic field EMF1 and the second electromagnetic field EMF2 may be opposite, the direction of the first induced current I2 may be opposite to the direction of the second induced current I3 (I2 may be clockwise and I3 may be counterclockwise). That is, the functional conductor 501 may be configured to generate induced currents in opposite directions. The induced currents generated by the functional conductor 501 in opposite directions may suppress a formation of circular eddy currents, thereby reducing a shielding effect on the NFC antenna radiator 100 and improving a performance of the NFC antenna radiator 100 in transmitting and receiving the NFC signal on the side where the functional conductor 501 is located.

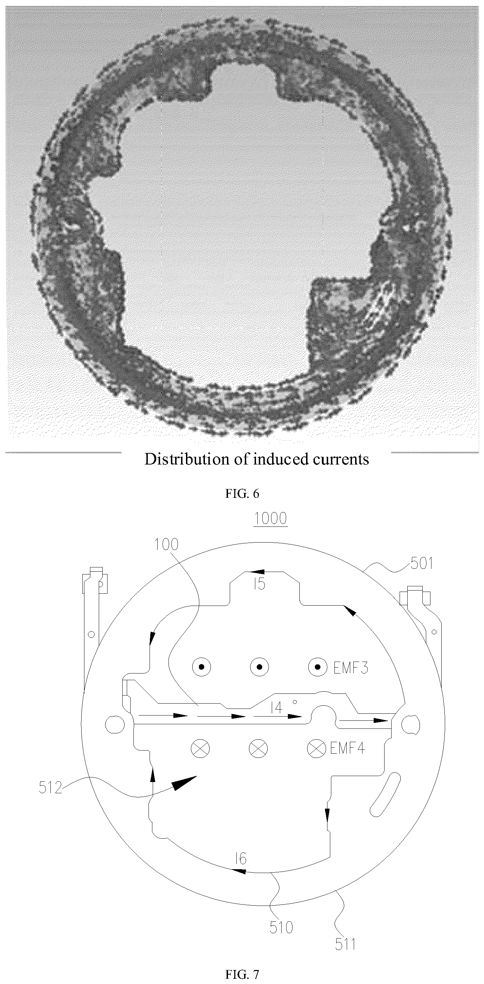

As shown in FIG. 5 and FIG. 6, FIG. 5 is a schematic view of a distribution of the first electromagnetic field and the second electromagnetic field on two sides of the NFC antenna radiator 100 in the electronic device 1000 shown in FIG. 4. FIG. 6 is a schematic view of a distribution of the first induced current and the second induced current of the functional conductor 501 in the electronic device 1000 shown in FIG. 4. As shown in FIG. 5, the NFC antenna radiator 100 may be configured to generate the first electromagnetic field EMF1 and the second electromagnetic field EMF2 in opposite directions within the hollowed-out region 512. As shown in FIG. 6, the inner edge of the functional conductor 501 may be configured to generate the first induced current I2 and the second induced current I3 in opposite directions.

In another possible application scenario, as illustrated in FIG. 7, the NFC antenna radiator 100 may be configured to generate an NFC current I4 under the excitation of the RF signal source 600. A flow direction of the NFC current may be indicated by I4 in FIG. 7. In this case, the NFC antenna radiator 100 may be configured to generate a first electromagnetic field EMF3 within the hollowed-out region 512 on a side of the extension direction of the NFC antenna radiator 100. A direction of the first electromagnetic field may be indicated by EMF3 in FIG. 7. The NFC antenna radiator 100 may be configured to generate a second electromagnetic field EMF4 within the hollowed-out region 512 on another side of the extension direction of the NFC antenna radiator 100. A direction of the second electromagnetic field may be indicated by EMF4 in FIG. 7. A first induced current generated by the functional conductor 501 near the first electromagnetic field EMF3 may be I5. A flow direction of the first induced current may be indicated by I5 in FIG. 7. A second induced current generated by the functional conductor 501 near the second electromagnetic field EMF4 may be I6. A flow direction of the second induced current may be indicated by I6 in FIG. 7. Since the directions of the first electromagnetic field EMF3 and the second electromagnetic field EMF4 may be opposite, the direction of the first induced current I5 may be opposite to the direction of the second induced current I6 (I5 may be counterclockwise and I6 may be clockwise). That is, the functional conductor 501 may be configured to generate induced currents in opposite directions. Likewise, the induced currents generated by the functional conductor 501 in opposite directions may suppress a formation of circular eddy currents, thereby reducing a shielding effect on the NFC antenna radiator 100 and improving a performance of the NFC antenna radiator 100 in transmitting and receiving the NFC signal on the side where the functional conductor 501 is located.

The electronic device 1000 provided by some embodiments of the present disclosure may include the functional conductor 501. The functional conductor 501 may substantially be ring-shaped. The inner edge 510 of the functional conductor 501 may surround and define the hollowed-out region 512. The NFC antenna radiator 100 may be disposed on a side of the functional conductor 501. The orthographic projection of the NFC antenna radiator 100 on the plane where the functional conductor 501 is located, may be at least partially located within the hollowed-out region 512. As a result, at least a part of the electromagnetic field generated by the NFC antenna radiator 100 may be enabled to cover the hollowed-out region 512 of the functional conductor 501, thereby reducing a communication blind spot, enhancing the NFC communication performance of the electronic device 1000, and improving user experience. Furthermore, since the orthographic projection of the NFC antenna radiator 100 on the plane where the functional conductor 501 is located, may at least partially be located within the hollowed-out region 512, the NFC antenna radiator 100 may be configured to generate the first electromagnetic field and the second electromagnetic field with opposite directions under the excitation of the RF signal source 600. In this way, the functional conductor 501 may be enabled to generate the first induced current and the second induced current in opposite directions. The first induced current and the second induced current generated by the functional conductor 501 in opposite directions may cancel each other out, thereby suppressing the formation of circular eddy currents, thus addressing the problem of radiation signals from the NFC antenna radiator 100 being shielded by the functional conductor 501 and improving the NFC communication performance.

In some embodiments, the functional conductor 501 may be implemented by a decorative member of the camera module 500. Through configuring the functional conductor 501 as the decorative member of the camera module 500, the NFC antenna radiator 100 may perform NFC communication in the region where the camera module 500 is disposed, ensuring that even as the number of cameras within the camera module 500 increases and an area of the camera module 500 expands, a reliable NFC communication may be still maintained. Thus, the electronic device 1000 may meet the demands of both multiple-camera configurations and NFC communication.

In the related art, technical solutions have been proposed in which the NFC antenna is offset from the metal decorative member or arranged to encircle or surround the metal decorative member, thereby enabling a communication direction of the NFC antenna to be away from the metal decorative member. However, the above technical solutions where the NFC antenna is offset from the metal decorative member may require the positioning of the NFC antenna to be away from the metal decorative member, which may increase the size of the electronic device and may result in the communication blind spot due to the area occupied by the metal decorative member not being covered by the NFC antenna, negatively affecting user experience. In the technical solutions where the NFC antenna encircles the metal decorative member, large areas of the decorative member may still lead to the blind spot in a central region of the decorative member, thereby negatively affecting user experience.

However, some technical solutions of the present disclosure may set the functional conductor 501 to be substantially ring-shaped. The inner edge of the functional conductor 501 may surround and define the hollowed-out region 512. The functional conductor 501 may be disposed on the signal transceiving side of the NFC antenna radiator 100. The orthographic projection of the NFC antenna radiator 100 on the plane where the functional conductor 501 is located, may be located within the hollowed-out region 512. As a result, the NFC antenna radiator 100 may be configured to transmit and receive the NFC signal through the hollowed-out region 512. The above design may address the following technical problem. As mobile phone photography technology advances, the camera module 500 in the existing mobile phones increases in size, and the decorative member of the camera module 500 occupies more space on the back of the mobile phone due to aesthetic requirements of product appearance design. As a result, a layout space for the NFC antenna radiator 100 may be compressed, leading to the technical problem of the blind spot in the NFC communication. In the following embodiments, unless otherwise specified, the functional conductor 501 may be taken as the decorative member of the camera module 500.

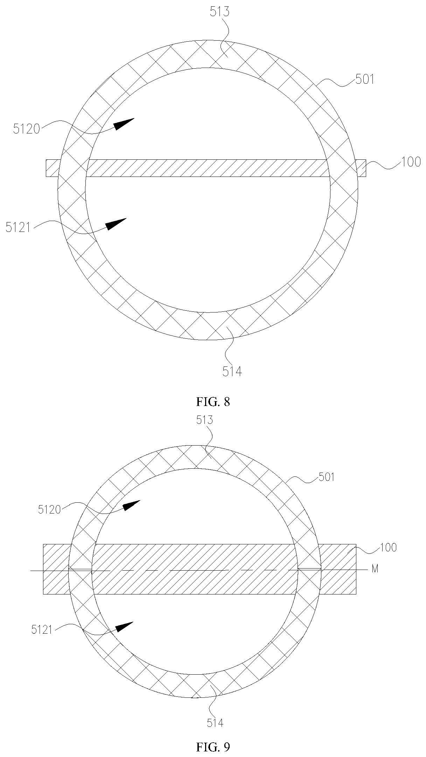

As shown in FIGS. 8 to 11, a part of the functional conductor 501 located on a side of the orthographic projection of NFC antenna radiator 100 on the plane where the functional conductor 501 is located, may be configured to generate a first induced current. Another part of the functional conductor 501 located on another side of the orthographic projection of NFC antenna radiator 100 on the plane where the functional conductor 501 is located, may be configured to generate a second induced current. In some embodiments, the functional conductor 501 may be divided into a first conductive portion 513 and a second conductive portion 514 by the orthographic projection of the NFC antenna radiator 100 on the plane where the functional conductor 501 is located. The first conductive portion 513 may be configured to generate the first induced current. The second conductive portion 514 may be configured to generate the second induced current.

A difference between a magnitude of the first induced current and a magnitude of the second induced current may be less than or equal to a magnitude of a predetermined current. The magnitude of the predetermined current may be equal to or approximately equal to zero. In other words, the magnitude of the first induced current generated by the functional conductor 501 may be equal to or approximately equal to the magnitude of the second induced current generated by the functional conductor 501. That is, I2 may be equal to or approximately equal to I3, and I5 may be equal to or approximately equal to I6. Since the difference in magnitude between the first induced current and second induced current is enabled to be less than or equal to the magnitude of the predetermined current, the shielding effect of the functional conductor 501 on the NFC antenna radiator 100 may be controlled through designing the magnitude of the predetermined current based on actual needs. It may be understood that when the magnitude of the predetermined current is zero or approximately zero, the first induced current and the second induced current generated by the functional conductor 501 may be considered to fully cancel each other, thus achieving complete suppression of circular eddy currents and minimizing the shielding effect of the functional conductor 501 on the NFC antenna radiator 100.

The first electromagnetic field may be generated in a part of the hollowed-out region 512 that is on a side of the orthographic projection of the NFC antenna radiator 100 on the plane where the functional conductor 501 is located. The second electromagnetic field may be generated in another part of the hollowed-out region 512 that is on another side of the orthographic projection of the NFC antenna radiator 100 on the plane where the functional conductor 501 is located. In some embodiments, a first sub hollowed-out region 5120 of the hollowed-out region 512 and a second sub hollowed-out region 5121 of the hollowed-out region 512 may be defined between the functional conductor 501 and the orthographic projection of the NFC antenna radiator 100 on the plane where the functional conductor 501 is located. The first electromagnetic field may be generated in the first sub hollowed-out region 5120. The second electromagnetic field may be generated in the second sub hollowed-out region 5121.

It may be understood that the first sub hollowed-out region 5120 of the hollowed-out region 512 may be defined between the first conductive portion 513 and the orthographic projection of the NFC antenna radiator 100 on the plane where the functional conductor 501 is located. The second sub hollowed-out region 5121 of the hollowed-out region 512 may be defined between the second conductive portion 514 and the orthographic projection of the NFC antenna radiator 100 on the plane where the functional conductor 501 is located.

A difference between a magnetic flux of the first electromagnetic field passing through the functional conductor 501 and a magnetic flux of the second electromagnetic field passing through the functional conductor 501 may be less than or equal to a predetermined magnetic flux. The predetermined magnetic flux may be zero or approximately zero. In other words, the magnetic flux of the first electromagnetic field passing through the functional conductor 501 and the second electromagnetic field passing through the functional conductor 501 may be the same or nearly the same. Since a difference between a magnetic flux of the first electromagnetic field, generated by the NFC antenna radiator 100 in the hollowed-out region 512, through the functional conductor 501 and a magnetic flux of the second electromagnetic field, generated by the NFC antenna radiator 100 in the hollowed-out region 512, through the functional conductor 501 is enabled to be equal to or approximately equal to the predetermined magnetic flux, the difference in magnitude between the first induced current and the second induced current generated by the functional conductor 501 may be controlled through designing the predetermined magnetic flux based on actual needs, thereby ensuring that the magnitude difference between the first induced current and the second induced current is less than or equal to the magnitude of the predetermined current, which facilitates the complete offset or cancellation of the first induced current and the second induced current.

In some embodiments, as shown in FIG. 8, the orthographic projection of the NFC antenna radiator 100 on the plane where the functional conductor 501 is located, may substantially extends along a straight line. Obviously, in other embodiments, the orthographic projection of the NFC antenna radiator 100 on the plane where the functional conductor 501 is located, may extend in an arc configuration, or the orthographic projection of the NFC antenna radiator 100 on the plane where the functional conductor 501 is located, may extend in a bent configuration. Through configuring the orthographic projection of the NFC antenna radiator 100 to substantially extend along a straight line on the plane where the functional conductor 501 is located, an electromagnetic field in a direction may be generated within the hollowed-out region 512 on a side of an extension direction of the orthographic projection of the NFC antenna radiator 100 on the plane where the functional conductor 501 is located. Further, another electromagnetic field in an opposite direction may be generated in the hollowed-out region 512 on another side of the extension direction of the orthographic projection of the NFC antenna radiator 100 on the plane where the functional conductor 501 is located. That is, the first electromagnetic field in one direction may be generated in the first sub hollowed-out region 5120 and the second electromagnetic field in the opposite direction may be generated in the second sub hollowed-out region 5121. In this way, the difference between the magnetic flux of the first electromagnetic field and the magnetic flux of the second electromagnetic field passing through the functional conductor 501 may be enabled to be less than or equal to the predetermined magnetic flux. Further, an induced current may be generated in a direction in a part of the functional conductor 501 corresponding to a side of the NFC antenna radiator 100, and an induced current may be generated in the opposite direction in another part of the functional conductor 501 corresponding to the opposite side of the NFC antenna radiator 100. That is, a current in a direction may be generated in the first conductive portion 513, and a current in the opposite direction may be generated in the second conductive portion 514, thereby facilitating that the difference between the magnitudes of the first induced current and second induced current generated in the functional conductor 501 is less than or equal to the magnitude of the predetermined current. Additionally, configuring the orthographic projection of the NFC antenna radiator 100 to substantially extend along a straight line on the plane where the functional conductor 501 is located, may be further beneficial for reducing mutual cancellation between the electromagnetic fields generated by the NFC antenna radiator 100, thereby improving a radiation performance of the NFC antenna radiator 100.

In some embodiments, as shown in FIGS. 9-11, the orthographic projection of the NFC antenna radiator 100 on the plane where the functional conductor 501 is located, may cover at least a part of a center line of the inner edge 510 of the functional conductor 501. In other words, the orthographic projection of the NFC antenna radiator 100 on the plane where the functional conductor 501 is located, may extend along a middle portion of the hollowed-out region 512. The inner edge 510 of the functional conductor 501 may be regular or irregular in shape. In some embodiments where the inner edge 510 has a regular shape, the center line of the inner edge 510 may be relatively easy to determine. In this case, the orthographic projection of the NFC antenna radiator 100 on the plane where the functional conductor 501 is located, may cover at least a part of the center line of the inner edge 510. For example, in a case where the hollowed-out region 512 is substantially circular, the inner edge 510 of the functional conductor 501 may substantially be circular, and the center line of the inner edge 510 of the functional conductor 501 may be a line segment passing through the center of the circle. In a case where the hollowed-out region 512 is substantially rectangular, the inner edge 510 of the functional conductor 501 may substantially be rectangular, and the center line of the inner edge 510 of the functional conductor 501 may be a line connecting midpoints of two long sides of the inner edge 510 of the functional conductor 501 or a line connecting midpoints of two short sides of the inner edge 510 of the functional conductor 501. In a case where the inner edge 510 of the functional conductor 501 has an irregular shape, the center line of the inner edge 510 of the functional conductor 501 may be relatively difficult to determine. In this case, the orthographic projection of the NFC antenna radiator 100 on the plane where the functional conductor 501 is located, at least partially covering the center line of the inner edge 510 of the functional conductor 501 may be understood to as the following: the orthographic projection of the NFC antenna radiator 100 on the plane where the functional conductor 501 is located, is generally located in a central region of the hollowed-out region 512.

The orthographic projection of the NFC antenna radiator 100 on the plane where the functional conductor 501 is located, may be configured to cover at least a part of the center line of the inner edge 510 of the functional conductor 501, thereby facilitating sizes of the parts of the hollowed-out region 512 on both sides of the NFC antenna radiator 100 in the extension direction of the NFC antenna radiator 100 to be equal or approximately equal to each other. In this way, the magnetic fluxes of the electromagnetic fields, generated in the respective portions of the hollowed-out region 512, passing through the functional conductor 501 may be further enabled to be equal or approximate to each other. That is, the difference between the magnetic flux of the first electromagnetic field and the magnetic flux of the second electromagnetic field passing through the functional conductor 501 may be enabled to be less than or equal to the predetermined magnetic flux. Additionally, the above configuration may help ensure that extension dimensions of the parts of the functional conductor 501 corresponding to both sides of the NFC antenna radiator 100 may be equal or approximately equal to each other. That is, an extension dimension of the first conductive portion 513 may be equal or approximately equal to an extension dimension of the second conductive portion 514, for enabling that the difference in the magnitude of the first induced current generated in the functional conductor 501 and the magnitude of the second induced current generated in the functional conductor 501 may be less than or equal to the magnitude of the predetermined current.

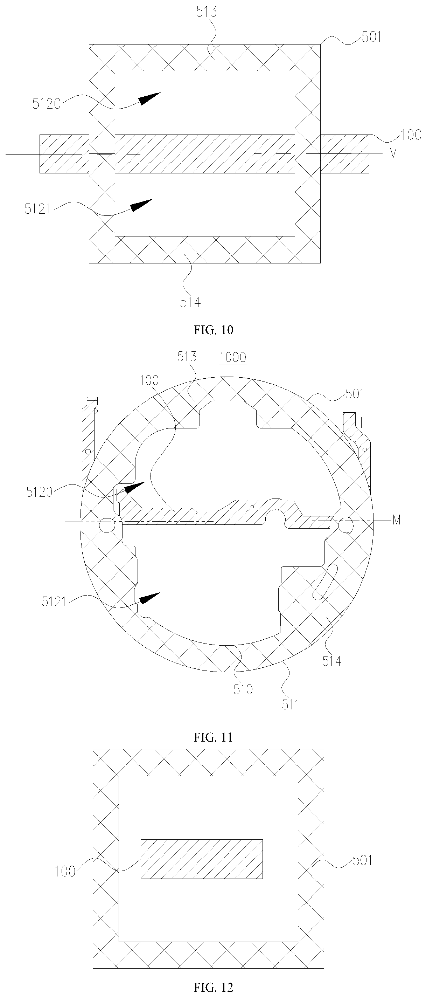

In some embodiments, as shown in FIGS. 12-14, orthographic projections of both ends of the NFC antenna radiator 100 on the plane where the functional conductor 501 is located, may be located within the hollowed-out region 512. In some embodiments, an orthographic projection of an end of the NFC antenna radiator 100 on the plane where the functional conductor 501 is located, may be located within the hollowed-out region 512 and an orthographic projection of another end of the NFC antenna radiator 100 on the plane where the functional conductor 501 is located, may overlap with the functional conductor 501. In some embodiments, an orthographic projection of an end of the NFC antenna radiator 100 on the plane where the functional conductor 501 is located, may be located within the hollowed-out region 512 and an orthographic projection of another end of the NFC antenna radiator 100 on the plane where the functional conductor 501 is located, is located outside the functional conductor 501.

As shown in FIG. 12, the orthographic projections of both ends of the NFC antenna radiator 100 on the plane where the functional conductor 501 is located, may be located within the hollowed-out region 512. In other words, the orthographic projection of the NFC antenna radiator 100 on the plane where the functional conductor 501 is located, may be entirely located within the hollowed-out region 512. The orthographic projections of both ends of the NFC antenna radiator 100 on the plane where the functional conductor 501 is located, may be located within the hollowed-out region 512, thereby enhancing the NFC communication performance in a case where the NFC antenna radiator 100 is of relatively small size, and facilitating a position of the orthographic projection of the NFC antenna radiator 100 on the plane where the functional conductor 501 is located, to be designed based on a communication position requirement. For example, through enabling the orthographic projection of the NFC antenna radiator 100 on the plane where the functional conductor 501 is located, to be located at the middle portion of the hollowed-out region 512, the NFC communication performance at the middle portion of the functional conductor 501 may be improved.

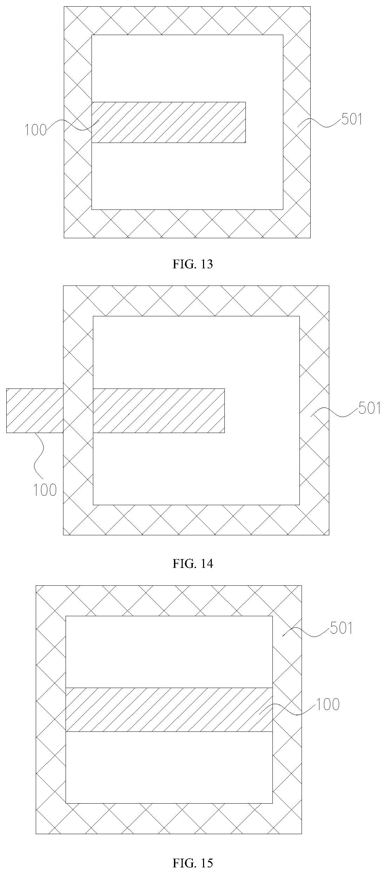

As shown in FIG. 13, the orthographic projection of an end of the NFC antenna radiator 100 on the plane where the functional conductor 501 is located, may be located within the hollowed-out region 512 and the orthographic projection of another end of the NFC antenna radiator 100 on the plane where the functional conductor 501 is located, may overlap with the functional conductor 501. In other words, the orthographic projection of the NFC antenna radiator 100 on the plane where the functional conductor 501 is located, may be partially located within the hollowed-out region 512. The orthographic projection of an end of the NFC antenna radiator 100 on the plane where the functional conductor 501 is located, may be located within the hollowed-out region 512 and the orthographic projection of another end of the NFC antenna radiator 100 on the plane where the functional conductor 501 is located, may overlap with the functional conductor 501, thereby enhancing the NFC communication performance in a case where the NFC antenna radiator 100 is of relatively small size. Further, the orthographic projection of the NFC antenna radiator 100 on the plane where the functional conductor 501 may be enabled to be located at an edge of a side of the hollowed-out region 512, thereby facilitating the avoidance of structures such as optical lenses in the camera module 500.

As shown in FIG. 14, the orthographic projection of an end of the NFC antenna radiator 100 on the plane where the functional conductor 501 is located, may be located within the hollowed-out region 512 and the orthographic projection of another end of the NFC antenna radiator 100 on the plane where the functional conductor 501 is located, is located outside the functional conductor 501. In other words, the orthographic projection of the NFC antenna radiator 100 on the plane where the functional conductor 501 is located, may be partially located within the hollowed-out region 512. The orthographic projection of an end of the NFC antenna radiator 100 on the plane where the functional conductor 501 is located, may be located within the hollowed-out region 512 and the orthographic projection of another end of the NFC antenna radiator 100 on the plane where the functional conductor 501 is located, is located outside the functional conductor 501, which may similarly enable the orthographic projection of the NFC antenna radiator 100 on the plane where the functional conductor 501 is located, to be located at a side of the hollowed-out region 512, thereby facilitating the avoidance of structures such as optical lenses in the camera module 500. Additionally, the part of the NFC antenna radiator 100 that is outside the functional conductor 501 may still be configured to perform the NFC communication, thus enlarging the effective NFC sensing region and improving NFC communication efficiency.

In some embodiments, as shown in FIGS. 15-17, orthographic projections of both ends of the NFC antenna radiator 100 on the plane where the functional conductor 501 is located, may overlap with the functional conductor 501. In some embodiments, an orthographic projection of an end of the NFC antenna radiator 100 on the plane where the functional conductor 501 is located, may overlap with the functional conductor 501 and an orthographic projection of another end of the NFC antenna radiator 100 on the plane where the functional conductor 501 is located, may be located outside the functional conductor 501. In some embodiments, orthographic projections of both ends of the NFC antenna radiator 100 on the plane where the functional conductor 501 is located, may be located outside the functional conductor 501.

As shown in FIG. 15, the orthographic projections of both ends of the NFC antenna radiator 100 on the plane where the functional conductor 501 is located, may overlap with the functional conductor 501. In other words, the orthographic projection of the NFC antenna radiator 100 on the plane where the functional conductor 501 is located, may be partially located within the hollowed-out region 512. The orthographic projections of both ends of the NFC antenna radiator 100 on the plane where the functional conductor 501 is located, may overlap with the functional conductor 501, thereby enabling the electromagnetic field generated by the NFC antenna radiator 100 to cover the entire hollowed-out region 512. In this way, no NFC communication blind spot may exist in the hollowed-out region 512 and a size of the NFC antenna radiator 100 may match a size of the functional conductor 501, thereby facilitating in designing the NFC antenna radiator 100 of the relatively small size and conserving internal space within the electronic device 1000.

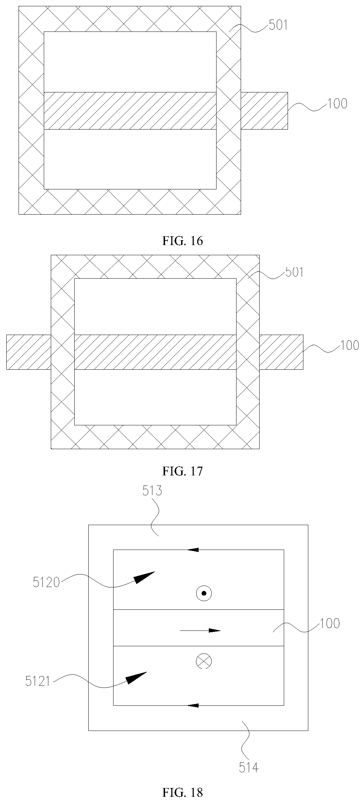

As shown in FIG. 16, the orthographic projection of an end of the NFC antenna radiator 100 on the plane where the functional conductor 501 is located, may overlap with the functional conductor 501 and the orthographic projection of another end of the NFC antenna radiator 100 on the plane where the functional conductor 501 is located, may be located outside the functional conductor 501. In other words, the orthographic projection of the NFC antenna radiator 100 on the plane where the functional conductor 501 is located, may be partially located within the hollowed-out region 512. The orthographic projection of an end of the NFC antenna radiator 100 on the plane where the functional conductor 501 is located, may overlap with the functional conductor 501 and the orthographic projection of another end of the NFC antenna radiator 100 on the plane where the functional conductor 501 is located, may be located outside the functional conductor 501, which may similarly enable the electromagnetic field generated by the NFC antenna radiator 100 to fully cover the hollowed-out region 512. In this way, no NFC communication blind spot may exist in the hollowed-out region 512. Moreover, since only the orthographic projection of one end of the NFC antenna radiator 100 on the plane where the functional conductor 501 is located, may be located outside the functional conductor 501, such configuration may be relatively well suited for product designs in which the camera module 500 is arranged near the edge of the electronic device 1000 (e.g., the upper-left corner on the back of a mobile phone). Furthermore, since the part of the NFC antenna radiator 100 located outside the functional conductor 501 may be enabled to participate in NFC communication, the effective NFC sensing region may be enlarged and the NFC communication efficiency may be improved.

As shown in FIG. 17, the orthographic projections of both ends of the NFC antenna radiator 100 on the plane where the functional conductor 501 is located, may be located outside the functional conductor 501. The above configuration may similarly allow the electromagnetic field generated by the NFC antenna radiator 100 to fully cover the hollowed-out region 512, for enabling that there is no NFC communication blind spot within the hollowed-out region 512. Furthermore, since the orthographic projections of both ends of the NFC antenna radiator 100 on the plane where the functional conductor 501 is located, are located outside the functional conductor 501, the above configuration may be relatively well suited for product designs in which the camera module 500 is disposed at the middle region of the electronic device 1000 (for example, the middle area of the on the back of a mobile phone). The two ends of the NFC antenna radiator 100 may perform NFC communication through a region outside the functional conductor 501 and the middle region of the NFC antenna radiator 100 may perform NFC communication through the hollowed-out region 512, thereby enlarging the NFC sensing area and improving NFC communication efficiency.

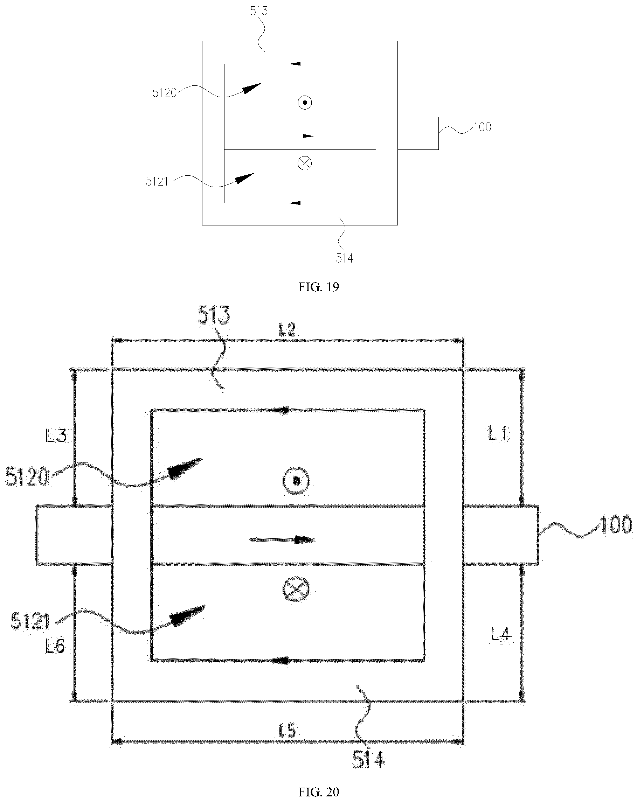

As shown in FIGS. 18 and 19, an area of the first sub hollowed-out region 5120 may be equal to an area of the second sub hollowed-out region 5121. Since the area of the first sub hollowed-out region 5120 is equal to the area of the second sub hollowed-out region 5121, a magnetic flux of the first electromagnetic field, generated by the NFC antenna radiator 100 in the first sub hollowed-out region 5120 through the functional conductor 501, through the functional conductor 501 and a magnetic flux of the second electromagnetic field, generated by the NFC antenna radiator 100 in the second sub hollowed-out region 5121, through the functional conductor 501 may be substantially equal to each other, thereby facilitating the functional conductor 501 to generate the first induced current and the second induced current of substantially equal magnitude and opposite directions.

The induced electromagnetic field generated by the first induced current, generated by the first conductive portion 513 in the hollowed-out region 512, may be opposite in direction to the induced electromagnetic field generated by the second induced current, generated by the second conductive portion 514 in the hollowed-out region 512. In some embodiments of the present disclosure, the first conductive portion 513 may be understood as an upper half of the functional conductor 501, while the second conductive portion 514 may be understood as a lower half of the functional conductor 501. Due to the opposing directions of the induced electromagnetic fields generated by the first conductive portion in the hollowed-out region 512 and the second conductive portion in the hollowed-out region 512, an electromagnetic interference from the functional conductor 501 to the NFC antenna radiator 100 to be reduced.

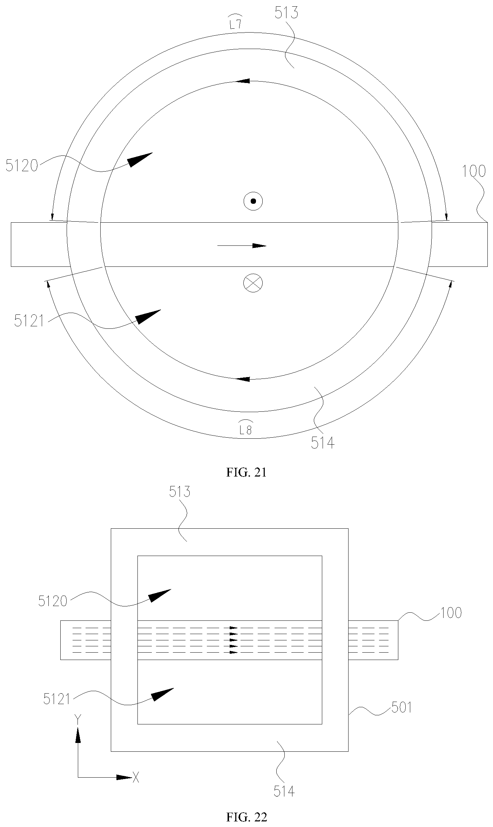

As shown in FIGS. 20 and 21, the extension dimension of the first conductive portion 513 may be equal to the extension dimension of the second conductive portion 514. For example, in some embodiments shown in FIG. 20, the extension size of the first conductive portion 513 may refer to a total length of rectangular sides of an upper portion of the functional conductor 501, as indicated by L1, L2, and L3 in FIG. 20. Similarly, the extension dimension of the second conductive portion 514 may refer to a total length of rectangular sides of a lower portion of the functional conductor 501, as indicated by L4, L5, and L6 in FIG. 20. In some embodiments shown in FIG. 21, the extension dimension of the first conductive portion 513 may refer to an arc length of an upper arcuate portion of the functional conductor 501, as indicated by L7 in FIG. 21. The extension dimension of the second conductive portion 514 may refer to an arc length of a lower arcuate portion, as indicated by L8 in FIG. 21.

Since the extension size of the first conductive portions 513 is equal to the extension size of the second conductive portion 514, the magnitude of the induced current generated by the first conductive portions 513 may be enabled to be substantially equal to the magnitude of the induced current generated by the first conductive portions 514, thereby facilitating the complete cancellation of the induced currents generated by the functional conductor 501.

In some embodiments, as shown in FIG. 22, the NFC antenna radiator 100 may include a plurality of wire segments arranged at intervals. The wire segments may be configured to generate NFC currents in the same direction under the excitation of the RF signal source 600. The number of wire segments may not be specifically limited herein. For example, the NFC antenna radiator 100 may include two, three, four, five, or etc., wire segments arranged at intervals. In other embodiments, the NFC antenna radiator 100 may include one single wire segment. Each wire segment may substantially be cylindrical, sheet-shaped, or other shapes. Widths of the wire segments may be identical or different. Lengths of the wire segments may be identical or different. The wire segments may be made of materials such as copper, aluminum, or copper-aluminum alloy, etc.

Orthographic projections of the wire segments on a plane where the hollowed-out region 512 is located may be spaced apart from one another along an extension direction perpendicular to the orthographic projection of the NFC antenna radiator 100 on the plane where the functional conductor 501 is located. The extension direction perpendicular to the orthographic projection of the NFC antenna radiator 100 on the plane where the functional conductor 501 is located, may be correspond to the Y-axis in the figures. In a case where the NFC antenna radiator 100 includes the plurality of wire segments and the NFC currents on the plurality of wire segments are in the same direction, the NFC currents, generated by all the wire segments in the same direction under the excitation of the RF signal source 600, may be configured to generate the first electromagnetic field and the second electromagnetic field of opposite directions in the hollowed-out region 512 on both sides of the extension direction of the NFC antenna radiator 100, thereby enabling the functional conductor 501 to generate the first induced current and the second induced current of opposite directions.

The NFC antenna radiator 100 may include the plurality of wire segments spaced apart from one another in a direction perpendicular to the extension direction of the NFC antenna radiator 100. The wire segments may be configured to generate NFC currents in the same direction under excitation of the RF signal source 600. In this way, electromagnetic fields generated in the hollowed-out region 512 on one side of the NFC antenna radiator 100 (i.e., the first sub hollowed-out region 5120) may share the same direction, and electromagnetic fields generated in the hollowed-out region 512 on another side of the NFC antenna radiator 100 (i.e., the second sub hollowed-out region 5121) may share the same direction. As a result, the functional conductor 501 adjacent to the hollowed-out region 512 on one side of the NFC antenna radiator 100 (i.e., the first conductive portion 513) may be enabled to generate only a single type of current and the functional conductor 501 adjacent to the hollowed-out region 512 on one side of the NFC antenna radiator 100 (i.e., the first conductive portion 514) may be enabled to generate only a single type of current in the opposite direction. In this way, the induced currents generated by the functional conductor 501 may be fully or largely canceled, thereby improving suppression of circular eddy currents.

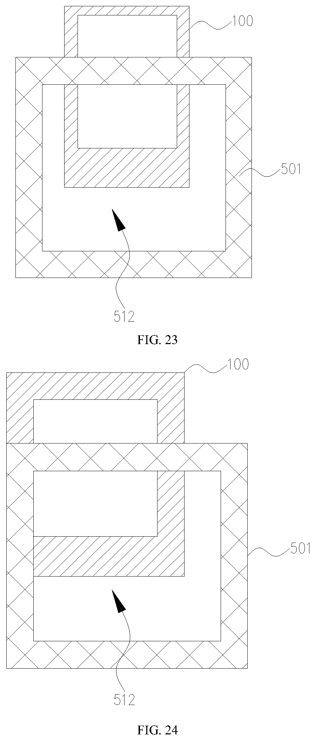

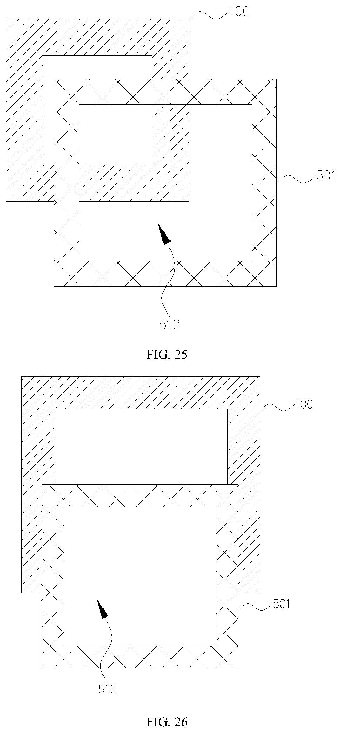

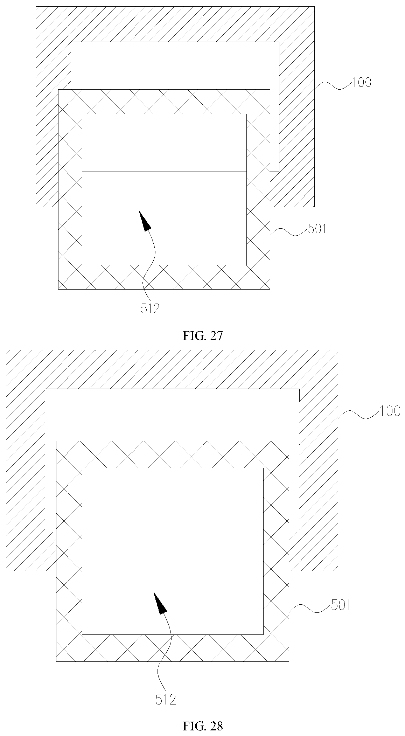

In some embodiments, as shown in FIGS. 23-28, the NFC antenna radiator 100 may substantially be ring-shaped. The ring-shaped design of the NFC antenna radiator 100 may increase the area of the NFC antenna radiator 100 and improve a coverage area of the electromagnetic field generated by the NFC antenna radiator 100. Additionally, in a case where the NFC antenna radiator 100 includes the plurality of wire segments arranged at intervals, a winding configuration may ensure that the NFC currents generated by the plurality of wire segments under the excitation of the RF signal source 600 are in the same direction.

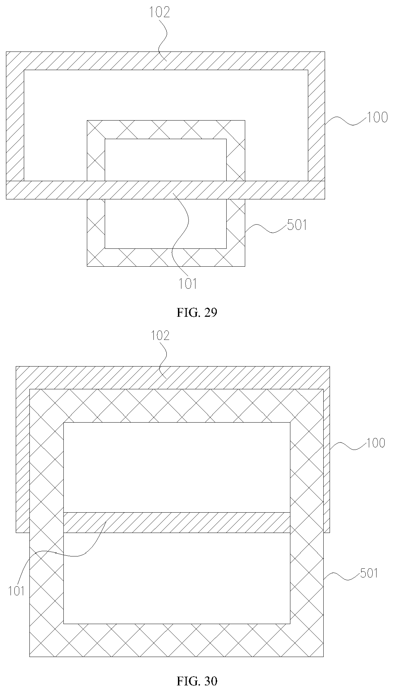

In some embodiments, as shown in FIGS. 29 and 30, the NFC antenna radiator 100 may include a first radiating portion 101 and a second radiating portion 102 disposed opposite to the first radiating portion 101. The orthographic projection of the first radiating portion 101 on the plane where the functional conductor 501 is located, may be located at the hollowed-out region 512. The orthographic projection of the second radiating portion 102 on the plane where the functional conductor 501 is located, may be located outside the functional conductor 501. The NFC antenna radiator 100 may substantially be ring-shaped. The orthographic projection of the first radiating portion 101 on the plane where the functional conductor 501 is located, may be located at the hollowed-out region 512. The orthographic projection of the second radiating portion 102 on the plane where the functional conductor 501 is located, may be located outside the functional conductor 501. In this way, the NFC communication functionality may be realized in the region outside the functional conductor 501. Moreover, in a case where the NFC antenna radiator 100 is formed in a coil-type configuration through winding, orthographic projections of the first radiating portion 101 on the plane where the functional conductor 501 is located, may be located at the hollowed-out region 512 and the plurality of wire segments of the first radiating portion 101 may be configured to carry NFC currents in the same direction.

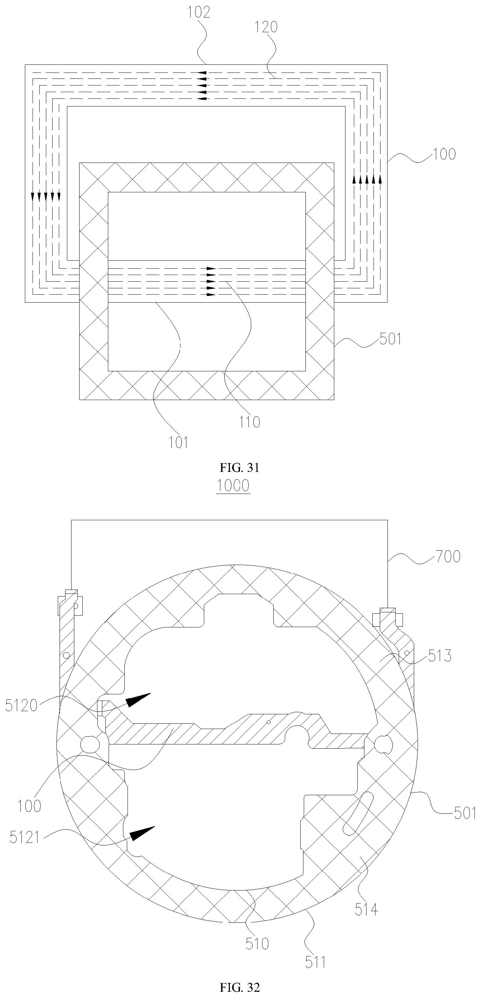

As shown in FIG. 31, the first radiating portion 101 may include one or more first wire segments 110. The second radiating portion 102 may include one or more second wire segments 120. The first wire segments and second wire segments may be sequentially connected end-to-end to form the coil-shaped NFC antenna radiator 100.

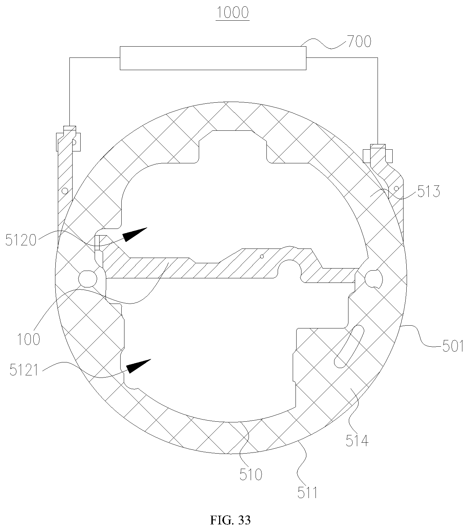

In some embodiments, as shown in FIGS. 32 and 33, two ends of the NFC antenna radiator 100 may be spaced apart from each other. The electronic device 1000 may further include an electrical connection member 700. The electrical connection member 700 may be electrically connected between the two ends of the NFC antenna radiator 100. An orthographic projection of the electrical connection member 700 on the plane where the functional conductor 512 is located, may be located outside the functional conductor 512. The electrical connection member 700 may include a conductive wire and/or a conductive frame (e.g., a metal frame), and the like. In a case where the electrical connection member 700 includes the conductive wire, the electrical connection member 700 may be located within the electronic device 1000. In a case where the electrical connection member 700 includes the conductive frame, the electrical connection member 700 may form part of the middle frame 301. In other words, the electronic device 1000 may further include the conductive frame, at least a part of the conductive frame may form the electrical connection member 700. In some embodiments of the present disclosure, the two ends of the NFC antenna radiator 100 may be connected by the electrical connection member 700, facilitating in a formation of a current loop and enabling the NFC communication through the electrical connection member 700.

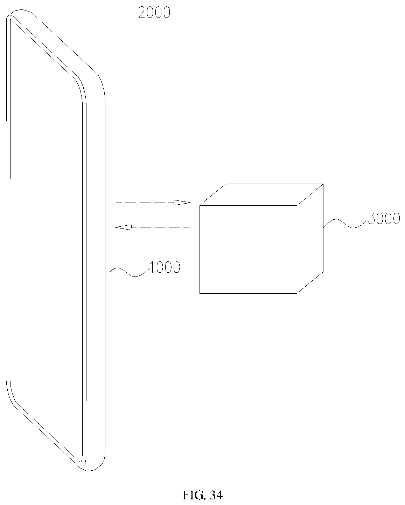

As shown in FIG. 34, some embodiments of the present disclosure may further provide a communication system 2000. The communication system 2000 may include an NFC device 3000 and the electronic device 1000 described above. The NFC device 3000 may be configured to perform a wireless communication with the electronic device 1000. The NFC device 3000 may be a public transit card reader, a subway card reader, an access control reader, a mobile phone, a tablet, a watch, a fitness band, or the like.

In some embodiments, the NFC device 3000 may be configured to serve as a communication receiving terminal, and the electronic device 1000 may be configured to serve as a communication transmitting terminal. That is, the NFC antenna radiator 100 of the electronic device 1000 may be configured to transmit an NFC signal. The NFC device 3000 may be configured to receive the NFC signal sent from the NFC antenna radiator 100 of the electronic device 1000, thereby achieving near-field wireless communication. In some embodiments, the NFC device 3000 may be configured to serve as the communication transmitting terminal and the electronic device 1000 may be configured to serve as the communication receiving terminal. That is, the NFC device 3000 may be configured to transmit the NFC signal. The NFC antenna radiator 100 of the electronic device 1000 may be configured to receive the NFC signal sent from the NFC device 3000, thereby achieving the near-field wireless communication. In some embodiments, the NFC device 3000 may alternately function as the communication transmitting terminal and the communication receiving terminal. The electronic device 1000 may alternately function as the communication transmitting terminal and the communication receiving terminal. That is, in a case where the NFC device 3000 functions as the communication receiving terminal, the electronic device 1000 may be configured to serve as the communication transmitting terminal. In a case where the NFC device 3000 functions as the communication transmitting terminal, the electronic device 1000 may be configured to serve as the communication receiving terminal. In this way, a bidirectional communication may be performed between the NFC device 3000 and the electronic device 1000.

The communication system 2000 provided be some embodiments of the present disclosure may include the aforementioned electronic device 1000. As a result, the wireless communication performance between the electronic device 1000 and the NFC device 3000 may be enhanced, thereby improving user experience.

The features mentioned in the specification, claims, and accompanying drawings may be arbitrarily combined in any manner, provided that such combinations are meaningful within the scope of the present disclosure. The technical effects and features described for the electronic device 1000 may apply correspondingly to the communication system 2000.

Although some embodiments of the present disclosure have been shown and described above, it should be understood that these embodiments are exemplary and should not be construed as limiting the present disclosure. Those ordinary skills in the art may make variations, modifications, substitutions, and adaptations to the described embodiments within the scope of the present disclosure. Such improvements and refinements shall also be considered within the protection scope of the present disclosure.

## Claims

1. An electronic device, comprising:
a functional conductor, being substantially ring-shaped, wherein a hollowed-out region is surrounded and defined by an inner edge of the functional conductor; and
a near field communication, NFC, antenna radiator, disposed on a side of the functional conductor and configured to transmit and receive a NFC signal at least toward a side where the functional conductor is located, wherein an orthographic projection of the NFC antenna radiator on a plane where the functional conductor is located, is at least partially located within the hollowed-out region;
wherein the NFC antenna radiator is configured to be electrically connected to a radio frequency, RF, signal source and to generate a first electromagnetic field and a second electromagnetic field in the hollowed-out region under an excitation of the RF signal source, for enabling the functional conductor to generate a first induced current and a second induced current; and
the first electromagnetic field and the second electromagnetic field are in opposite directions and the first induced current and the second induced current are in opposite directions.

2. The electronic device as claimed in claim 1, wherein a difference between a magnitude of the first induced current and a magnitude of the second induced current is less than or equal to a magnitude of a predetermined current.

3. The electronic device as claimed in claim 2, wherein the magnitude of the predetermined current is substantially equal to zero.

4. The electronic device as claimed in claim 1, wherein a difference between a magnetic flux of the first electromagnetic field passing through the functional conductor and a magnetic flux of the second electromagnetic field passing through the functional conductor is less than or equal to a predetermined magnetic flux.

5. The electronic device as claimed in claim 1, wherein the orthographic projection of the NFC antenna radiator on the plane where the functional conductor is located, substantially extends along a straight line.

6. The electronic device as claimed in claim 1, wherein the orthographic projection of the NFC antenna radiator on the plane where the functional conductor is located, at least partially covers a center line of the inner edge of the functional conductor.

7. The electronic device as claimed in claim 1, wherein the function conductor is divided into a first conductive portion and a second conductive portion by the orthographic projection of the NFC antenna radiator on the plane where the functional conductor is located; and
the first conductive portion is configured to generate the first induced current and the second conductive portion is configured to generate the second induced current.

8. The electronic device as claimed in claim 7, wherein a first sub hollowed-out region of the hollowed-out region is defined between the first conductive portion and the orthographic projection of the NFC antenna radiator on the plane where the functional conductor is located, and a second sub hollowed-out region of the hollowed-out region is defined between the second conductive portion and the orthographic projection of the NFC antenna radiator on the plane where the functional conductor is located; and
the first sub hollowed-out region is configured to generate the first electromagnetic field and the second sub hollowed-out region is configured to generate the second electromagnetic field.

9. The electronic device as claimed in any one of claims 1-8, wherein orthographic projections of both ends of the NFC antenna radiator on the plane where the functional conductor is located, is located within the hollowed-out region; or
an orthographic projection of an end of the NFC antenna radiator on the plane where the functional conductor is located, is located within the hollowed-out region and an orthographic projection of another end of the NFC antenna radiator on the plane where the functional conductor is located, overlaps with the functional conductor; or
an orthographic projection of an end of the NFC antenna radiator on the plane where the functional conductor is located, is located within the hollowed-out region and an orthographic projection of another end of the NFC antenna radiator on the plane where the functional conductor is located, is located outside the functional conductor.

10. The electronic device as claimed in any one of claims 1-8, wherein orthographic projections of both ends of the NFC antenna radiator on the plane where the functional conductor is located, overlap with the functional conductor; or
an orthographic projection of an end of the NFC antenna radiator on the plane where the functional conductor is located, overlaps with the functional conductor and an orthographic projection of another end of the NFC antenna radiator on the plane where the functional conductor is located, is located outside the functional conductor; or
orthographic projections of both ends of the NFC antenna radiator on the plane where the functional conductor is located, are located outside the functional conductor.

11. The electronic device as claimed in claim 10, wherein a first sub hollowed-out region of the hollowed-out region and a second sub hollowed-out region of the hollowed-out region are defined between the functional conductor and the orthographic projection of the NFC antenna radiator on the plane where the functional conductor is located; and
an area of the first sub hollowed-out region is substantially equal to an area of the second sub hollowed-out region.

12. The electronic device as claimed in claim 10, wherein the functional conductor is divided into a first conductive portion and a second conductive portion by the orthographic projection of the NFC antenna radiator on the plane where the functional conductor is located; and
the first conductive portion is configured to generate the first induced current, the second conductive portion is configured to generate the second induced current, and a direction of an induced electromagnetic field generated by the first induced current in the hollowed-out region is opposite to a direction of an induced electromagnetic field generated by the second induced current in the hollowed-out region.

13. The electronic device as claimed in claim 12, wherein an extension dimension of the first conductive portion is substantially equal to an extension dimension of the second conductive portion.

14. The electronic device as claimed in any one of claims 1-8, wherein the NFC antenna radiator comprises a plurality of wire segments arranged at intervals and the plurality of wire segments are configured to generate NFC currents in the same direction under the excitation of the RF signal source.

15. The electronic device as claimed in any one of claims 1-8, wherein the NFC antenna radiator is substantially ring-shaped.

16. The electronic device as claimed in claim 15, wherein the NFC antenna radiator comprises a first radiating portion and a second radiating portion arranged opposite to each other; and
an orthographic projection of the first radiating portion on the plane where the functional conductor is located, is at least partially located within the hollowed-out region and an orthographic projection of the second radiating portion on the plane where the functional conductor is located, is located outside the functional conductor.

17. The electronic device as claimed in any one of claims 1-8, wherein two ends of the NFC antenna radiator are spaced apart from each other; and
the electronic device further comprises an electrical connection member electrically connected between the two ends of the NFC antenna radiator, and an orthographic projection of the electrical connection member on the plane where the functional conductor is located, is located outside the functional conductor.

18. The electronic device as claimed in claim 17, wherein the NFC antenna radiator is one of the following: a flexible printed circuit, FPC, antenna radiator, a laser direct structuring, LDS, antenna radiator, or a printed circuit board, PCB, antenna radiator; and
the electronic device further comprises a conductive frame and at least a part of the conductive frame forms the electrical connection member.

19. The electronic device as claimed in any one of claims 1-8, further comprising a camera module, wherein the functional conductor is implemented by a decorative member of the camera module.

20. A communication system, comprising:
an NFC device; and
the electronic device as claimed in any one of claims 1-19, wherein a wireless communication is performed between the NFC device and the electronic device.
